(19) Europäisches Patentamt
European Patent Office
Office européen des brevets

(11) Publication number: 0 414 239 A2

# (12) EUROPEAN PATENT APPLICATION

(21) Application number: 90116125.7

(51) Int. Cl.5: G03G 5/06

(22) Date of filing: 23.08.90

(30) Priority: 25.08.89 JP 219495/89

(43) Date of publication of application: 27.02.91 Bulletin 91/09

(84) Designated Contracting States: BE CH DE FR GB IT LI NL

(71) Applicant: BANDO CHEMICAL INDUSTRIES, LIMITED
2-15, Meiwa-dori 3-chome
Hyogo-ku Kobe-shi(JP)

(72) Inventor: Kanzaki, Toshiaki, c/o Bando Chem. Ind., Ltd.
2-15, Meiwadori 3-chome, Hyogo-ku
Kobe(JP)
Inventor: Izumi, Hisashi, c/o Bando Chem. Ind., Ltd.
2-15, Meiwadori 3-chome, Hyogo-ku
Kobe(JP)

(74) Representative: von Kreisler, Alek, Dipl.-Chem. et al
Patentanwälte Von Kreisler-Selting-Werner, Deichmannhaus am Hauptbahnhof
D-5000 Köln 1(DE)

## (54) Laminated organic photosensitive material.

(57) A laminated organic photosensitive material which comprises an electroconductive support, a charge producing layer and a charge transporting layer formed thereon, wherein the charge transporting layer contains a bistyryl compound represented by the formula

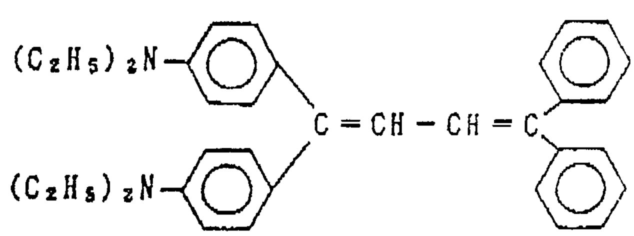

as a charge transporting substance and a high molecular weight polycarbonate having a number average molecular weight of not less than 40000 as a binder resin.

EP 0 414 239 A2

# LAMINATED ORGANIC PHOTOSENSITIVE MATERIAL

## BACKGROUND OF THE INVENTION

### Field of the Invention

This invention relates to a durable laminated organic photosensitive material which has a charge producing layer and a charge transporting layer formed on an electroconductive support.

### Description of the Prior Art

A composite or laminated type organic photosensitive material has been developed and put to practical use in recent years. This type of organic photosensitive material is disclosed in, for example, Japanese Patent Publications Nos. 42380/1980 and 34099/1985. It comprises an electroconductive support, a charge producing layer formed on the support and a charge transporting layer formed on the charge producing layer. For instance, such a composite photosensitive material has an electroconductive support of aluminum layer, a charge producing layer formed on the aluminum layer, and a charge transporting layer formed on the charge producing layer.

The charge producing layer is formed by, for example, preparing a dispersion of a charge producing substance together with an organic solvent, a binder resinand, and if necessary a plasticizer, applying the dispersion onto the support, and drying to a thin film. The charge transporting layer is formed by, for example, dissolving a charge transporting substance in an organic solvent together with a binder resin, and if necessary a plasticizer, applying the solution onto the charge producing layer, and drying to a thin film.

There are already known a variety of charge producing substances including phthalocyanine compounds and azo compounds, as disclosed in Japanese Patent Laid-Open No. 166959/1984. A number of charge transporting substances are also already known, among which is a bistyryl compound represented by the formula

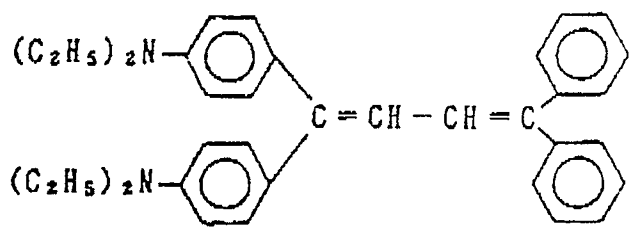

as disclosed in Japanese Patent Laid-Open No. 30255/1987.

The laminated organic photosentive material which contains the above mentioned bistyryl compound as a charge transporting substance has an advantage that it is readily charged, however, there is an undesirable tendency that cracks are generated on the surface of the charge transporting layer which contains the bistyryl compound when the laminated organic photosentive material is used over a long period of time. Namely, the photosentive material does not stand long term use and hence is undurable.

## SUMMARY OF THE INVENTION

It is therefore, an object of the invention to solve the problems as above set forth involved in the known laminated organic photosensitive materials, and to provide a laminated organic photosensitive material which contains the bistyryl compound as a charge transporting substance and which nevertheless stands long term use free from generation of cracks on the surface of the charge transporting layer.

In accordance with the invention, there is provided a laminated organic photosentive material which

comprises an electroconductive support, a charge producing layer and a charge transporting layer formed thereon, wherein the charge transporting layer contains a bistyryl compound represented by the formula

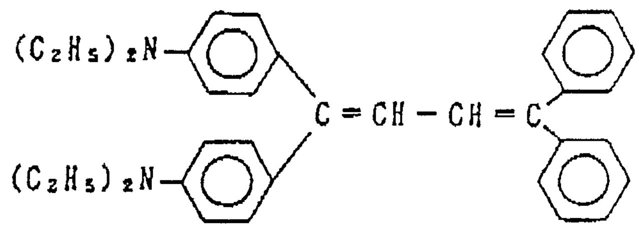

as a charge transporting substance and a high molecuirar weight polycarbonate having a number average molecular weight of not less than 40000 as a binder resin.

## DETAILED DESCRIPTION OF THE INVENTION

The laminated organic photosensitive material of the invention has a charge producing layer on an electroconductive support. The charge producing layer contains a charge producing substance, and there may be used any known charge producing substance. It includes, for example, X-type nonmetal phthalocyanine as described in U.S. Patent No. 3,816,118, metal phthalocyanine pigments and azo pigments.

The binder resin for the charge producing layer is not specifically limited, and it may be either a thermoplastic or thermosetting resin. The binder resin may be exemplified by, for example, polystyrene, styrene-acrylonitrile copolymer, styrene-butadiene copolymer, styrene-maleic anhydride copolymer, polyester resin, polyvinyl chloride, ethylene-vinyl chloride copolymer, vinyl chloride-vinyl acetate copolymer, ethylene-vinyl acetate-vinyl chloride copolymer, polyvinyl acetate, polyvinylidene chloride, polyallylate resin, phenoxy resin, polycarbonate, cellulose acetate resin, ethyl cellulose resin, polyvinyl butyral resin, polyvinyl formal resin, polyvinyl toluene, poly(N-vinyl carbazole) resin, acrylic resin, silicone resin, epoxy resin, melamine resin, urethane resin, phenol resin or alkyd resin.

The smaller the content of the binder resin in the charge producing layer, the better, but it is usually in the range of about 5-50 % by weight based on the layer. The charge producing layer has a thickness usually of about 0.05-1 microns.

The organic solvent used in the preparation of the charge producing layer is such that it dissolves the binder resin. Thus, the organic solvent used includes, for example, benzene, toluene, xylene, methylene chloride, chloroform, 1,2-dichloroethane, 1,1,2,2-tetrachloroethane, chlorobenzene, dichlorobenzene, ethyl acetate, butyl acetate, methyl ethyl ketone, dioxane, tetrahydrofuran, cyclohexanone, methyl cellosolve or ethyl cellosolve.

The laminated organic photosensitive material of the invention has a charge transporting layer on the charge producing layer. The charge transporting layer contains the aforesaid bistyryl compound as a charge transporting substance and a high molecular weight polycarbonate having a number average molecular weight of not less than 40000 as a binder resin.

A polycarbonate resin having a number average molecular weight of about 30000 has hitherto been used as a binder resin for the charge transporting layer. However, the use of such a polycarbonate as a binder resin is inevitably attended by generation of cracks on the surface of charge transporting layer when the photosensitive material is used over a long period of time.

However, the use of a high molecular weight polycarbonate resin having a number average molecular weight of not less than about 40000, preferably of not less than 50000, as a binder resin for the charge transporting layer remarkably immproves the strength of the layer. Thus, when a solution of the bistyryl compound and the polycarbonate is coated onto the charge producing layer, heated and dried to evaporate the solvent, the resultant layer bears internal residual stress generated in the layer. As a result, there is obtained a charge transporting layer free from the generation of cracks over long term use of laminated photosensitive material. Further, such a charge transporting layer is of highly wear resistance.

The organic solvent used for the preparation of the charge transporting layer may includes, for example, tetrahydrofuran, dioxane, toluene, chlorobenzene, methylene chloride, chloroform, 1,2-dichloroethane or 1,1,2,2-tetrachloroethane.

The content of the charge transporting substance in the charge transporting layer is usually in the range of about 10-60 % by weight based on the layer, and the thickness of the layer is usually in the range of about 5-100 microns.

The invention will now be described more specifically with reference to example, however, the invention is not limited thereto.

Example 1

An amount of 0.3 g of X-type nonmetal phthalocyanine (8120B from Dainippon Ink Kagaku Kogyo K.K.) was added to a solution of 0.2 g of ethylene/vinyl acetate/vinyl chloride copolymer (Graftmer R-5 from Nippon Zeon K.K.) in 15 ml of tetrahydrofuran, and then the resultant mixture was milled in a ball mill for two hours. An additional amount of 7.5 ml of tetrahydrofuran was added to the mixture to prepare a dispersion.

The dispersion was applied onto an aluminum drum substrate of 262 mm in breadth and 30 mm in diameter and then dried by heating to form a charge producing layer having a thickness of 0.5 microns.

An amount of 9.8 g of the hereinbefore mentioned bistyryl compound was dissolved in a solution of 12 g of polycarbonate resin having a number average molecular weight of 59000 (Panlite C-1400 from Teijin Kasei K.K.) in 75 ml of chloroform.

The resultant solution was applied onto the charge producing layer, and then dried by heating to form a charge transporting layer having a thickness of 20 microns, wherein a laminated organic photosensitive material was obtained.

The laminated organic photosensitive material was fitted to a laser beam printer (Model F1000+ available from Kyocera K.K.) and copies were made in succession. After copying more than 10000 sheets, neither deterioration of image quality nor cracks on the surface of the charge transporting layer was observed.

Comparative Example 1

A polycarbonate having a number average molecular weight of 28000 was used as a binder resin for a charge transporting layer, and otherwise in the same manner as in the Example 1, a laminated organic photosentive material was prepared.

In the same manner as in the Example 1, a copying test was carried out with the prepared photosentive materialal using the same printer as above. When 4500 sheets of copies were made, cracks were generated on parts of the surface of the charge transporting layer. Also deterioration of image quality was observed.

Example 2

The same solutions used for preparation of chrage transporting layers in the Example 1 and the Comparative Example 1 were respectively formed into films by a casting method.

The films were made into DIN 53504•S3A dumbbell specimens and subjected to tensile test with a tensile speed of 0.02 mm per second. The film from the solution used in the Example 1 was found to have a tensile strength of 3.4 $Kg/mm^2$, whereas the film from the solution used in the Comparative Example 1 was found to have a tensile strength of 1.4 $Kg/mm^2$,

Example 3

The photosensitive materials prepared in the Example 1 and the Comparative Example 1 were immersed in n-butanol at room temperature to accelerate the generation of cracks on the surface of the charge transporting layer.

It is found that no cracks were generated with the photosensitive materials prepared in the Example 1 even after immersion for more than one month. In contrast to this, it was found that cracks were generated on the whole surface with the photosensitive material prepared in the Comparative Example 1 when the material was immersed for 15 minutes.

## Claims

1. A laminated organic photosensitive material which comprises an electroconductive support, a charge producing layer and a charge transporting layer formed thereon, wherein the charge transporting layer contains a bistyryl compound represented by the formula

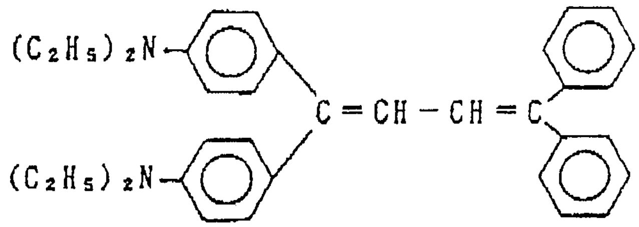

as a charge transporting substance and a high molecularar weight polycarbonate having a number average molecular weight of not less than 40000 as a binder resin.

2. The laminated organic photosensitive material as claimed in claim 1 wherein the charge transporting layer contains the bustyryl compound in an amount of 10-60 % by weight based on the layer.

3. The laminated organic photosensitive material as claimed in claim 1 wherein the charge transporting layer has a thickness of 5-100 microns.

4. The laminated organic photosensitive material as claimed in claim 1 wherein the charge producing layer contains a nonmetal phthalocyanine as a charge producing substance.

5. The laminated organic photosensitive material as claimed in claim 1 wherein the charge producing layer has a thickness of 0.05-1 microns.